# EUROPÄISCHE PATENTSCHRIFT

(11) **EP 0 820 905 B1**
(45) Veröffentlichungstag und Bekanntmachung des Hinweises auf die Patenterteilung: **06.06.2001**
(21) Anmeldenummer: 97111296.6
(22) Anmeldetag: 04.07.1997
(51) Int. Cl.: B60R 21/20

(54) **Knieschutzeinrichtung**
Knee-bolster device
Dispositif protège-genoux

(30) Priorität: 26.07.1996 DE 29613045 U
(43) Veröffentlichungstag der Anmeldung: 28.01.1998
(73) Patentinhaber: TRW Occupant Restraint Systems GmbH & Co. KG, 73551 Alfdorf (DE)
(72) Erfinder: Heilig, Alexander, 73550 Wissgoldingen (DE); Bigi, Dante, Dr., 73557 Mutlangen (DE)
(74) Vertreter: Kitzhofer, Thomas, Dipl.-Ing.

(56) Entgegenhaltungen:
- WO-A-97/09207
- DE-A- 2 063 478
- DE-A- 2 153 601
- US-A- 5 458 366
- "INFLATABLE BELLOWS-BOX PANEL" RESEARCH DISCLOSURE, Nr. 374, 1.Juni 1995, Seite 371 XP000519424
- PATENT ABSTRACTS OF JAPAN vol. 097, no. 008, 29.August 1997 & JP 09 109813 A (MITSUBISHI MOTORS CORP), 28.April 1997,

## Beschreibung

Die Erfindung betrifft eine Knieschutzeinrichtung für Fahrzeuginsassen, mit einem Gassack im Fußraum eines Fahrzeugs, einem Gasgenerator und einer Gassackabdeckung aus Energie absorbierendem Material.

Eine gattungsgemäße Knieschutzeinrichtung ist aus der US 3 784 223 bekannt. Durch eine Knieschutzeinrichtung wird verhindert, daß ein nicht angegurteter Fahrzeuginsasse im Kollisionsfall nach vorn in Richtung Knieraum abtauchen kann. Bei der bekannten Knieschutzeinrichtung ist der Gassack unterhalb der Lenksäule hinter einer Gassackabdeckung angeordnet, welche eine Reißlinie aufweist. Im Kollisionsfall durchbricht der sich entfaltende Gassack die Abdeckung und entfaltet sich in Richtung Knie des Fahrzeuginsassen, um deren Bewegung abzufangen. Bezüglich der Lage der zerstörten Gassackabdeckung muß stets sichergestellt sein, daß ein Insasse im Kollisionsfall nicht gegen sie prallt und sich dabei Verletzungen zuziehen kann.

Ferner ist aus der US 5 312 131 eine Knieschutzeinrichtung bekannt, deren Gassackabdeckung als schwenkbare Klappe ausgebildet ist, wobei auch hier ausgeschlossen sein muß, daß sich der Fahrzeuginsasse im Kollisionsfall an der Klappe verletzen kann.

Darüber hinaus bekannte deformierbare Elemente, die im Bereich des Knieraumes in Fahrzeugen eingebaut sind und gegen die die Knie eines Insassen im Kollisionsfall prallen, bieten nur unzureichend Schutz und schränken den Kniefreiraum aufgrund ihrer technisch bedingten großen Dicke ein.

Bei den bislang bekannten Knieschutzeinrichtungen besteht für Insassen, die sich außerhalb der mittleren Sitzposition befinden, ferner die Gefahr, daß ihre Knie seitlich an den Knieschutzeinrichtungen entlanggleiten und nicht zurückgehalten werden.

Die Erfindung schafft eine Knieschutzeinrichtung für Fahrzeuginsassen, die sich durch einen geringen notwendigen Bauraum und eine gute Schutzwirkung auszeichnet. Ferner bietet sie auch Fahrzeuginsassen ausreichend Schutz, die sich außerhalb der mittleren Sitzposition befinden. Bei einer Knieschutzeinrichtung der eingangs genannten Art wird dies erfindungsgemäß dadurch erreicht, daß die Gassackabdeckung im Kollisionsfall durch den aufgeblasenen Gassack nach außen, in Richtung Fußraum des Fahrzeugs deformiert ist und zusammen mit dem Gassack ein Kniepolster bildet. Der Gassack durchdringt beim Entfalten weder die Abdeckung noch klappt er sie auf, wie dies bei den bislang bekannten Knieschutzeinrichtungen der Fall ist, sondern deformiert sie nur in Richtung zu den Knien des Insassen, so daß diese im Kollisionsfall auf ein weiches Kniepolster auftreffen. Die erfindungsgemäße Knieschutzeinrichtung ist leicht, benötigt wenig Bauraum und wenig Bauteile.

Die Härte des Gassacks und damit des gesamten Kniepolsters kann durch verschiedene Maßnahmen eingestellt werden, beispielsweise durch Versehen von Ausströmöffnungen am Gassack oder durch einen Mehrstufengasgenerator.

Vorzugsweise wird die Gassackabdeckung durch den Gassack auf der Außenseite der Abdeckung nur um etwa zwischen 10 und 100 mm in Richtung Fußraum gegenüber ihrem Ausgangszustand deformiert. Dadurch wird ein Vorbeigleiten der Knie von sich außerhalb der mittleren Sitzposition befindlichen Insassen verhindert.

Aus dem Dokument "2244 Research Disclosure (1995) June, No. 374, Emsworth, GB" ist eine Knieschutzeinrichtung für Fahrzeuginsassen bekannt, bei der eine schubladenartige Prallplatte durch einen aufblasbaren Faltenbalg in Richtung Knie des Insassen geschoben wird. Dabei kann es zum Auftreffen der Prallplatte auf die Knie kommen, was Verletzungen hervorrufen könnte.

Die DE-A-2 063 478 offenbart eine Knieschutzeinrichtung mit einem Gassack, auf dem vorderseitig eine elastische Schutzschicht aufgebracht ist, die sich zusammen mit dem Gassack in Richtung zu den Knien des Insassen bewegt. Die Schutzschicht ist vorzugsweise ein elastisches Polster.

Eine ähnliche Konstruktion wie die zuvor beschriebene zeigt die US-A-5 458 366, mit dem Unterschied, daß im Gassack mehrere durch Zwischenwände abgetrennte aufblasbare Kammern vorgesehen sind. Auch hier wird das Polster zusammen mit dem Gassack, auf dem es befestigt ist, in Richtung Knie bewegt.

Weitere Merkmale und Vorteile der Erfindung ergeben sich aus der nachfolgenden Beschreibung und aus den Zeichnungen, auf die Bezug genommen wird. In den Zeichnungen zeigen:
Figur 1 in Fahrtrichtung einen Fahrzeuginnenraum im Bereich des Armaturenbrettes mit jeweils einer erfindungsgemäßen Knieschutzeinrichtung auf der Fahrer- und der Beifahrerseite;
Fig. 2 eine entsprechende Ansicht einer zweiten Ausführungsform von Knieschutzeinrichtungen, mit in der Mittelkonsole angeordneten Gasgeneratoren;
Fig. 3 eine entsprechende Ansicht einer dritten Ausführungsform von Knieschutzeinrichtungen, mit in der A-Säule angeordneten Gasgeneratoren;
Fig. 4 eine schematische Seitenansicht der in Fig. 1 gezeigten Knieschutzeinrichtung auf der Fahrerseite mit nicht aufgeblasenem Gassack;
Fig. 5 die Knieschutzeinrichtung nach Fig. 4 mit entfaltetem Gassack und deformierter Gassackabdeckung; und
Fig. 6 eine Fig. 5 entsprechende Ansicht einer weiteren Ausführungsform der erfindungsgemäßen Knieschutzeinrichtung.

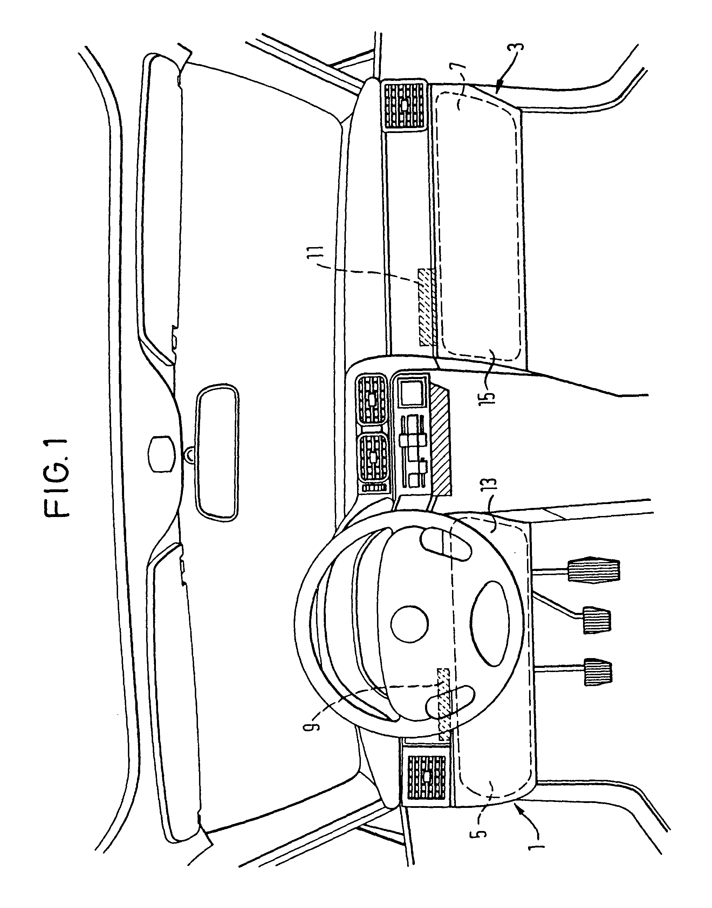

In Fig. 1 ist eine im Fußraum des Fahrzeugs angeordnete Knieschutzeinrichtung 1 für die Fahrerseite und eine Knieschutzeinrichtung 3 für die Beifahrerseite gezeigt.

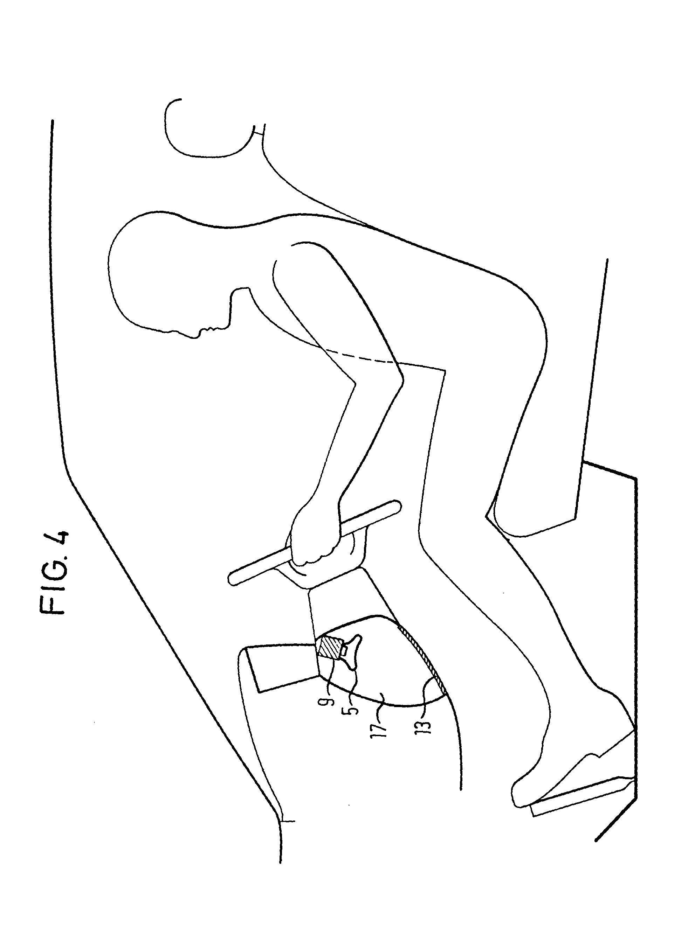

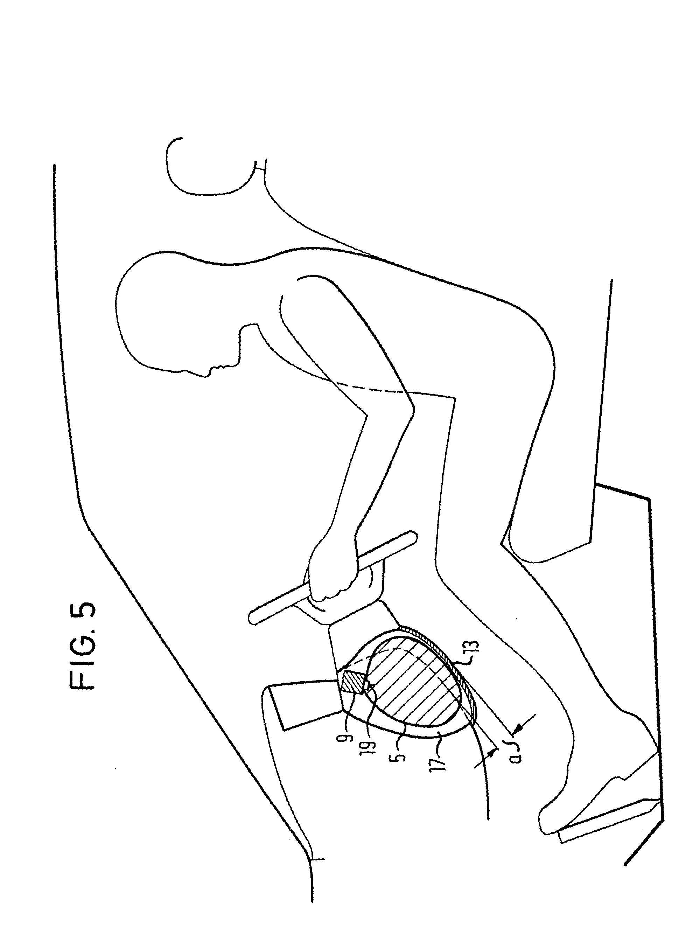

Jede einzelne Knieschutzeinrichtung 1, 3 weist wiederum einen Gassack 5, 7 auf, wobei die Gassäcke 5, 7 in Fig. 1 in aufgeblasenem Zustand und durch unterbrochene Linien dargestellt sind. Jedem Gassack 5, 7 ist ein jeweils im oberen Bereich des Armaturenbrettes versteckt angeordneter Gasgenerator 9, 11 zugeordnet. Die Knieschutzeinrichtungen 1, 3 umfassen ferner jeweils eine Gassackabdeckung 13, 15, die die Gassäcke 5, 7 im aufgeblasenen und nicht aufgeblasenen Zustand abdecken. Die Gassackabdeckungen 13, 15 sind aus einem weichen, Energie absorbierenden, durch den Gassack 5, 7 deformierbaren Material. Die Dicke der Gassackabdeckungen 13, 15 und ihr Material sind so auf das Volumen der zugeordneten Gassäcke 5, 7 und deren Härte im aufgeblasenen Zustand abgestimmt, daß sie während des Aufblasens der Gassäcke 5, 7 in Richtung zu den Knien der Fahrzeuginsassen verformt werden. Dies ist den Fign. 4 und 5 deutlicher zu entnehmen. In Fig. 4 ist der Gassack 5 in noch nicht entfalteten Zustand dargestellt. Ein im Armaturenbrett hinter der Abdeckung 13 vorgesehener Hohlraum 17 wird durch den Gassack 5 nicht vollständig ausgefüllt. Der Hohlraum 17 ist in Fig. 4 übergroß dargestellt.

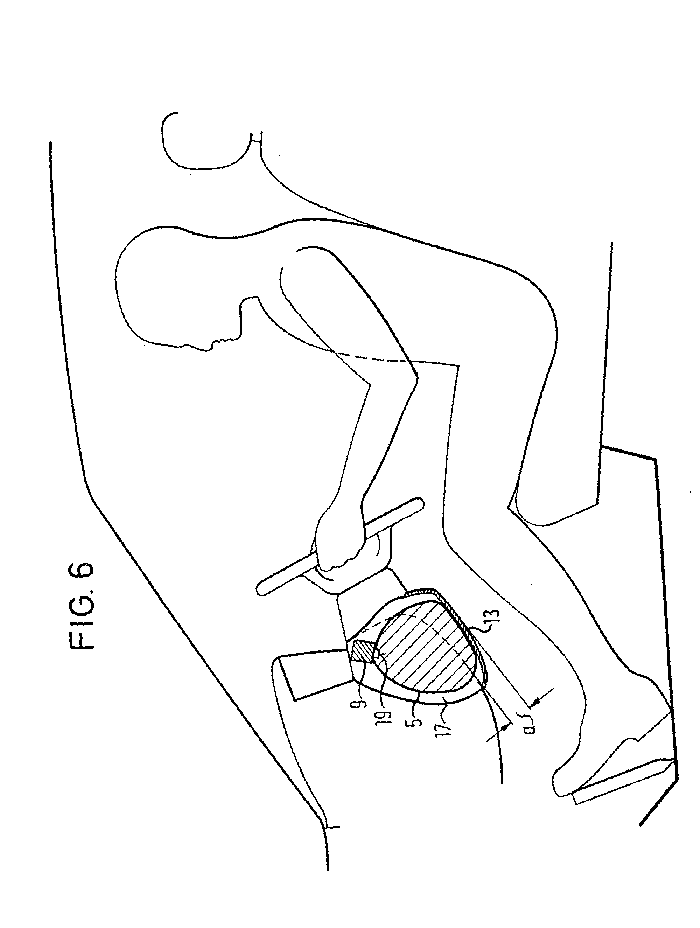

Im Falle einer Kollision wird im Gasgenerator 9 enthaltenes pyrotechnisches Material entzündet oder ein gespeichertes Gasvolumen freigegeben und strömt über mehrere Ausströmöffnungen 19 in seinem Gehäuse in das Innere des Gassacks 5 und bläst diesen auf. Am Ende des Aufblasvorgangs stößt der Gassack 5 schließlich an die Innenseite der Gassackabdeckung 13 an und, wie Fig. 5 zu entnehmen ist, deformiert diese in Richtung zu den Knien des Insassen. Die Gassackabdeckung 13 reißt dabei nicht auf oder klappt auch nicht weg und bildet mit dem an ihr anliegenden Gassack 5 ein Kniepolster, gegen das die Knie des Fahrzeuginsassen schlagen, wodurch verhindert wird, daß der Fahrzeuginsasse nach unten in den Knieraum abtauchen kann. Die sich im Kollisionsfall in Richtung Fußraum bewegenden Knie des Insassen werden frühzeitig abgefangen, so daß sie mit geringerer Relativgeschwindigkeit auf die Knieschutzeinrichtung 1 prallen. Die Außenseite der Gassackabdeckung 13 wird bei aufgeblasenem Gassack 5 nur um eine Strecke a von ca. 10 bis 100 mm gegenüber ihrem Ursprungszustand deformiert, um keine Verletzungen durch eine sich um eine große Strecke a deformierende Gassackabdeckung 13, 15 oder einen großvolumigen Gassack zu verursachen. Während bei der in Fig. 5 gezeigten Ausführungsform die Gassackabdeckung 13 auf nahezu ihrer gesamten Außenfläche durch Dehnung deformiert ist, ist es ebenso möglich (vgl. Fig. 6), eine Gassackabdeckung vorzusehen, die nur im Randbereich deformierbar ist. Durch Vorsehen einer entsprechenden Struktur ist der übrige Bereich formstabil und wirkt wie eine in Richtung Fußraum bewegte Platte. Diese Platte verteilt die durch die auftreffenden Knie eingeleitete Last großflächig.

Die Knieschutzeinrichtungen 1, 3 stabilisieren wirksam die Lage des Fahrzeuginsassen. Die durch die Knieschutzeinrichtungen 1,3 gebildeten Kniepolster nehmen die kinetische Energie der gegen sie prallenden Knie auf und dämpfen den Aufprall. Sich außerhalb der mittleren Sitzposition befindliche Insassen können nicht an den Knieschutzeinrichtungen 1, 3 vorbeigleiten, da diese nicht die üblichen, großvolumigen, aus einer Abdeckung austretenden Gassäcke, deren Form auf eine mittlere Sitzposition abgestimmt ist, aufweisen, sondern sich breitflächig quer über den gesamten Fußraum erstrecken. Die auf die Gassackabdeckungen 13, 15 auftreffenden Knie werden nicht in allen Richtungen fixiert, da sie auf Kniepolster auftreffen und nicht in großvolumige Gassäcke eintauchen und darin, wie bei einem Kugelgelenk, gehalten werden, was zu einer höheren Belastung der Oberschenkelknochen in axialer Richtung führt. Bei dem Kniepolster besitzen die Knie in vertikaler und horizontaler Richtung noch Bewegungsfreiheit.

Die Härte jedes Kniepolsters wird durch die Härte des zugehörigen aufgeblasenen Gassacks 5, 7 und durch die Materialien des verformbaren Polsters bestimmt. Diese wiederum wird dadurch beeinflußt, daß die Gassäcke 5, 7 aus einem Gewebe bestehen, dessen Durchströmcharakteristik sich abhängig vom Gassackinnendruck ändert. Zur Reduzierung der Härte der Gassäcke 5, 7 weisen diese zusätzlich Ausströmöffnungen auf.

Von den zahlreichen Austrittsöffnungen 19 am Gasgeneratorgehäuse können ferner durch eine geeignete Einrichtung, die über ein Signal betätigbar ist, nur einige Austrittsöffnungen 19 teilweise oder ganz geöffnet werden, so daß auch dadurch der Gassackinnendruck steuerbar ist.

Die Gasgeneratoren 9, 11 sind ferner als Mehrstufengasgeneratoren ausgebildet, so daß durch Zündung einer oder mehrerer Stufen der Gassackinnendruck variiert werden kann.

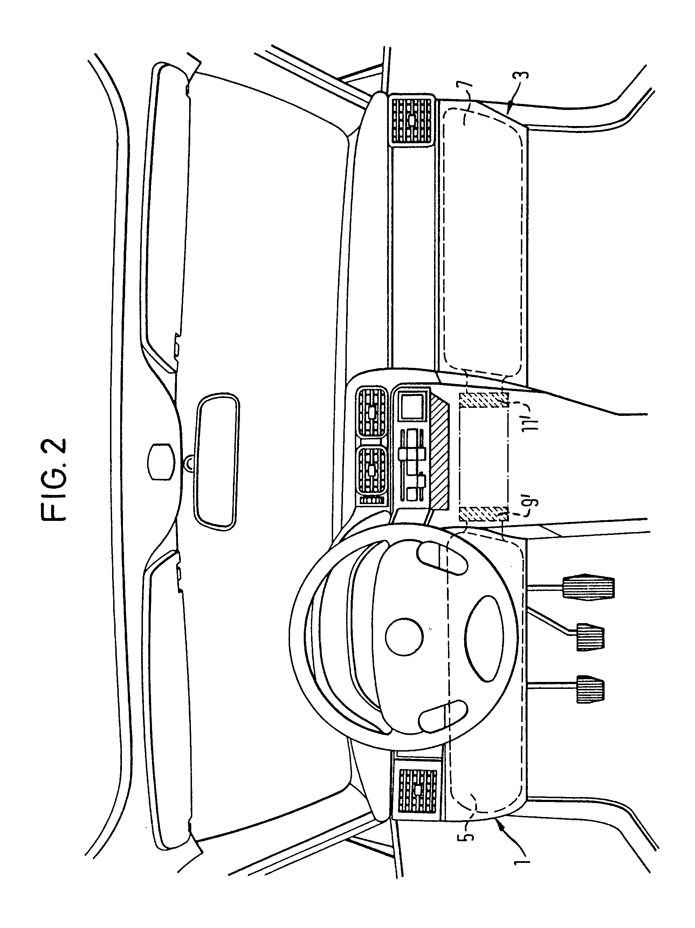

Während die Gasgeneratoren 9, 11 bei der in den Fign. 1, 4 und 5 gezeigten Ausführungsform der Knieschutzeinrichtungen 1, 3 knapp unterhalb der Instrumententafel im oberen Bereich des Armaturenbrettes angeordnet sind, damit die Knie keinesfalls gegen die Gehäuse der Gasgeneratoren 9, 11 stoßen können, sind die entsprechenden Gasgeneratoren 9', 11' gemäß Fig. 2 in die Mittelkonsole integriert. Die Gasgeneratoren 9', 11' können auch zu einem gemeinsamen Gasgenerator zusammengefaßt werden, wie dies mit strichpunktierten Linien in Fig. 2 angedeutet ist. Dann bilden die Knieschutzeinrichtungen 1, 3 eine gemeinsame Knieschutzeinrichtung. Dies bringt zwar eine Kosteneinsparung mit sich, jedoch wird, selbst für den Fall, daß der Beifahrersitz nicht besetzt ist, im Kollisionsfall stets auch der zugeordnete Gassack 7 aufgeblasen.

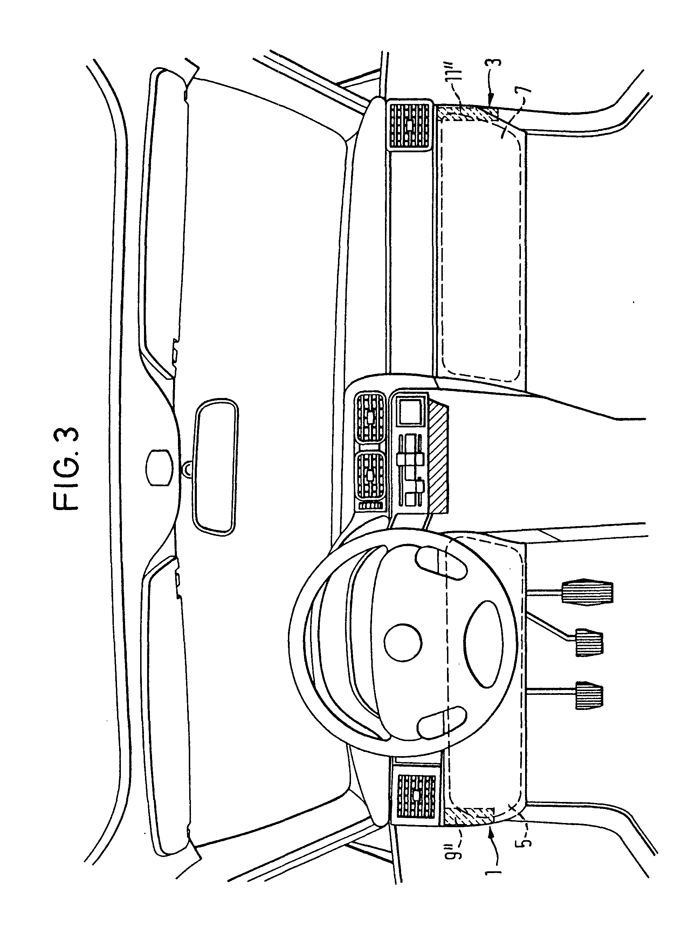

Bei der in Fig. 3 gezeigten Ausführungsform der Knieschutzeinrichtungen 1, 3 sind die Gasgeneratoren 9'', 11'' seitlich im Bereich der A-Säule des Fahrzeugs angeordnet.

## Patentansprüche

1. Knieschutzeinrichtung für Fahrzeuginsassen, mit einem Gassack (5, 7) im Fußraum eines Fahrzeugs, einem Gasgenerator (9, 9', 9", 11, 11', 11'') und einer Gassackabdeckung (13, 15) aus Energie absorbierendem Material, dadurch gekennzeichnet, daß die Gassackabdeckung (13, 15) im Kollisionsfall durch den aufgeblasenen Gassack (5, 7) nach außen, in Richtung Fußraum des Fahrzeugs deformiert ist und zusammen mit dem Gassack (5, 7) ein Kniepolster bildet.

2. Knieschutzeinrichtung nach Anspruch 1, dadurch gekennzeichnet, daß der Gassack (5, 7) aus einem Gewebe besteht, dessen Durchströmcharakteristik sich abhängig vom Gassackinnendruck ändert.

3. Knieschutzeinrichtung nach Anspruch 1 oder 2, dadurch gekennzeichnet, daß der Gassack (5, 7) mit Ausströmöffnungen versehen ist.

4. Knieschutzeinrichtung nach einem der vorstehenden Ansprüche, gekennzeichnet durch einen Mehrstufengasgenerator.

5. Knieschutzeinrichtung nach einem der vorstehenden Ansprüche, dadurch gekennzeichnet, daß im Gasgeneratorgehäuse mindestens eine Austrittsöffnung (19) vorgesehen ist, deren Querschnitt veränderbar ist.

6. Knieschutzeinrichtung nach einem der vorstehenden Ansprüche, dadurch gekennzeichnet, daß die Gassackabdeckung durch den aufgeblasenen Gassack (5, 7) auf ihrer Außenseite gegenüber ihrem Ursprungszustand zwischen etwa 10 und 100 mm in Richtung Fußraum des Fahrzeugs deformiert wird.

7. Knieschutzeinrichtung nach einem der vorstehenden Ansprüche, dadurch gekennzeichnet, daß der Gasgenerator (9, 9', 9", 11, 11', 11'') im Bereich der Mittelkonsole, der A-Säule des Fahrzeugs oder im oberen Bereich der Armaturentafel angeordnet ist.

8. Knieschutzeinrichtung nach einem der vorstehenden Ansprüche, dadurch gekennzeichnet, daß die Gassackabdeckung (13, 15) auf nahezu ihrer gesamten Außenfläche deformiert ist.

9. Knieschutzeinrichtung nach einem der Ansprüche 1 bis 7, dadurch gekennzeichnet, daß die Gassackabdeckung nur im Randbereich deformiert und im übrigen Bereich formstabil ist.

10. Knieschutzeinrichtung für die Fahrer- und Beifahrerseite eines Fahrzeugs, mit jeweils einer Knieschutzeinrichtung (1, 3) nach einem der vorstehenden Ansprüche auf der Fahrer- und Beifahrerseite, dadurch gekennzeichnet, daß den Gassäcken (5, 7) der beiden Knieschutzeinrichtungen (1, 3) ein gemeinsamer Gasgenerator zugeordnet ist.

## Claims

1. A knee restraint means for vehicle occupants, including a gas bag (5, 7) in the footwell of a vehicle, a gas generator (9, 9', 9", 11, 11', 11") and a gas bag cover (13, 15) of an energy-absorbent material, characterized in that in a crash situation said gas bag cover (13, 15) is deformed outward toward the footwell of the vehicle by the inflated gas bag (5, 7) and forms a knee cushion together with the gas bag (5, 7).

2. The knee restraint means as set forth in claim 1, characterized in that said gas bag (5, 7) consists of a fabric the permeability characteristic of which changes as a function of the gas bag internal pressure.

3. The knee restraint means as set forth in claim 1 or 2, characterized in that said gas bag (5, 7) is provided with discharge openings.

4. The knee restraint means as set forth in any of the preceding claims, characterized by a multistage gas generator.

5. The knee restraint means as set forth in any of the preceding claims, characterized in that in the gas generator housing at least one exit port (19) is provided, the cross-section of which is variable.

6. The knee restraint means as set forth in any of the preceding claims, characterized in that said gas bag cover is deformed at its outer surface by the inflated gas bag (5, 7) by between about 10 and 100 mm, compared with its original condition, toward the footwell of the vehicle.

7. The knee restraint means as set forth in any of the preceding claims, characterized in that said gas generator (9, 9', 9", 11, 11', 11") is disposed in the region of the center console, the A pillar of the vehicle or in the upper region of the dashboard.

8. The knee restraint means as set forth in any of the preceding claims, characterized in that said gas bag cover (13, 15) is deformed over almost its total outer surface area.

9. The knee restraint means as set forth in any of the claims 1 to 7, characterized in that said gas bag cover is deformed only in the edge region and is dimensionally stable in the remaining region.

10. A knee restraint means for the driver's side and the front passenger's side of a vehicle, each including a knee restraint means (1, 3) as set forth in any of the preceding claims on the driver's side and the front passenger's side, characterized in that said gas bags (5, 7) of the two knee restraint means (1, 3) are assigned a common gas generator.

## Revendications

1. Système de protection des genoux pour les passagers d'un véhicule, avec un sac à gaz (5,7) à l'endroit des pieds des passagers dans un véhicule, avec un générateur de gaz (9, 9', 9", 11, 11', 11") et avec un recouvrement (13, 15) du sac à gaz en une matière qui absorbe l'énergie, caractérisé en ce que le recouvrement du sac à gaz (13, 15) est déformé vers l'extérieur, en cas de collision, par le sac à gaz gonflé (5, 7), en direction de l'endroit des pieds des passagers dans le véhicule et forme conjointement avecle sac à gaz (5, 7) un coussin pour les genoux.

2. Système de protection des genoux, selon la revendication 1, caractérisé en ce que le coussin à gaz (5, 7) est en un tissu, dont les caractéristiques d'écoulement des gaz à travers celui-ci se modifient en fonction de la pression intérieure dans le sac à gaz.

3. Système de protection des genoux, selon la revendication 1 ou 2, caractérisé en ce que le sac à gaz (5, 7) est pourvu d'orifices d'écoulement vers l'extérieur.

4. Système de protection des genoux selon l'une des revendications précédentes, caractérisé par un générateur de gaz à plusieurs étages.

5. Système de protection des genoux selon l'une des revendications précédentes, caractérisé en ce que l'on prévoit dans le carter du générateur de gaz au moins un orifice de sortie (19), dont la section transversale peut varier.

6. Système de protection des genoux selon l'une des revendications précédentes, caractérisé en ce que le recouvrement du sac à gaz est déformé par le sac à gaz gonflé (5, 7) sur son côté extérieur par rapport à son état initial entre environ 10 et 100 mm en direction de l'endroit des pieds des passagers dans le véhicule.

7. Système de protection des genoux selon l'une des revendications précédentes, caractérisé en ce que le générateur de gaz (9, 9', 9", 11, 11', 11") est disposé dans la zone de la console centrale, de la colonne A du véhicule ou dans la zone supérieure du tableau de bord.

8. Système de protection des genoux selon l'une des revendications précédentes, caractérisé en ce que le recouvrement du sac à gaz (13, 15) est déformé sur presque toute sa surface extérieure.

9. Système de protection des genoux selon l'une des revendications 1 à 7, caractérisé en ce que le recouvrement du sac à gaz n'est déformé que dans la zone du bord et a une forme stable dans la zone restante.

10. Système de protection des genoux à la place du conducteur et à la place à côté du conducteur dans un véhicule, avec respectivement un système de protection des genoux (1, 3) selon l'une des revendications précédentes, du côté du conducteur et du côté de la place à côté du conducteur, caractérisé en ce qu'un générateur de gaz commun est associé aux sacs à gaz (5, 7) des deux systèmes de protection des genoux (1, 3).
